**Europäisches Patentamt**

**European Patent Office**

**Office européen des brevets**

(19)

(11) Veröffentlichungsnummer : **0 385 173 B1**

(12)

# EUROPÄISCHE PATENTSCHRIFT

(45) Veröffentlichungstag der Patentschrift :
**04.11.92 Patentblatt 92/45**

(51) Int. Cl.$^5$ : **G01J 3/02**, G01J 3/42,
G01N 21/35, G01N 21/05

(21) Anmeldenummer : **90102736.7**

(22) Anmeldetag : **12.02.90**

(54) **Nichtdispersiver Infrarot-Gasanalysator.**

(30) Priorität : **27.02.89 DE 8902312 U**

(43) Veröffentlichungstag der Anmeldung :
**05.09.90 Patentblatt 90/36**

(45) Bekanntmachung des Hinweises auf die
Patenterteilung :
**04.11.92 Patentblatt 92/45**

(84) Benannte Vertragsstaaten :
**DE FR GB IT**

(56) Entgegenhaltungen :
**DE-A- 2 720 636**
**DE-A- 3 030 002**
**US-A- 3 700 890**

(73) Patentinhaber : **SIEMENS**
**AKTIENGESELLSCHAFT**
**Wittelsbacherplatz 2**
**W-8000 München 2 (DE)**

(72) Erfinder : **Ruch, Claude, Dr.**
**4, rue Vauban**
**F-67630 Lauterbourg (FR)**

EP 0 385 173 B1

## Beschreibung

Die Erfindung bezieht sich auf einen nichtdispersiven Infrarot-(NDIR)-Gasanalysator mit einer Infrarot-Strahlungsquelle, mit mindestens einer das Meßgas enthaltenden, stirnseitig mit strahlungsdurchlässigen Fenstern versehenen Küvette und Mitteln zur selektiven Messung der Infrarot-Absorption einer bestimmten Komponente des Meßgases.

Es ist bekannt, die Innenwände von Küvetten derartiger Analysatoren, um eine hohe Reflexion zu erreichen, mit einer Goldschicht auszukleiden. Dabei hat sich bei der Analyse von Gasen, insbesondere von Abgasen, die Hexan enthalten, ein relativ großer Wasserdampffehler bemerkbar gemacht.

Es besteht die Aufgabe, eine Möglichkeit zu finden, ohne die teure Goldauskleidung der Küvetten auszukommen und den Wasserdampffehler zu verringern.

Eine Lösung der Aufgabe wird darin gesehen, daß gemäß Anspruch 1 die innere Wandfläche der Küvette mit einer Metallschicht aus Reinaluminium mit einem Al-Gehalt > 90 %, vorzugsweise 99 %, ausgekleidet ist.

Es hat sich überraschenderweise herausgestellt, daß bei der Verwendung dieses preiswerten Materials die Querempfindlichkeit gegen Wasserdampf erheblich vermindert wird.

Die Metallschicht sollte auf ihrer Oberfläche eine Rauhtiefe von < 2 μm aufweisen.

Sie kann entweder durch ein Aufdampf- oder Sprühverfahren direkt auf die Innenwand der üblicherweise aus einer für Druckguß geeigneten Al-Mg-Legierung hergestellten Küvette aufgebracht werden, oder es wird in einer bevorzugten Ausführungsform ein vorgeformtes, auswechselbares Reinaluminiumblech als Auskleidung in die Küvette eingesetzt.

Es ergibt sich so die vorteilhafte Möglichkeit, bei Messungen mit großer Empfindlichkeit und/oder wenig aggressiven Gasen Bleche mit hochpolierter Oberfläche einzusetzen oder sie bei Messungen, bei denen die maximale Empfindlichkeit des Analysengeräts nicht ausgeschöpft werden braucht oder bei denen ein Gas mit einem hohen Verschmutzungsgrad und mit einer hohen Aggressivität analysiert werden soll, auf einfache Weise gegen Bleche mit wenig reflektierender Oberfläche auszutauschen. Infolge der elastischen Vorspannung des Blechs legt sich dieses eng an die Kammerwand an, so daß auch bei einem Temperaturwechsel die Erhaltung der Wandauskleidung gewährleistet ist.

Zur Erläuterung der Erfindung ist in den Figuren ein Ausführungsbeispiel dargestellt und im folgenden beschrieben.

Figur 1 zeigt einen zum Teil stark schematisierten NDIR-Gasanalysator im Schnitt,
die Figuren 2 und 3 ein vorgeformtes Blech für die Innenauskleidung in zwei Ansichten.

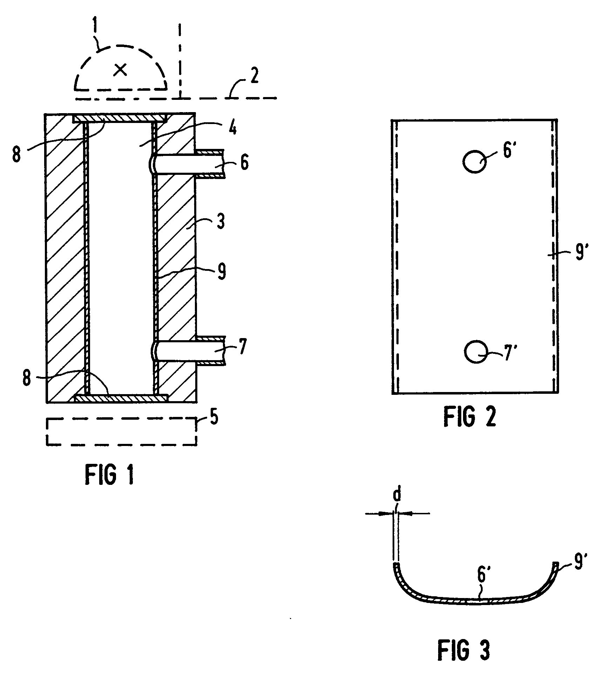

Figur 1 zeigt einen NDIR-Gasanalysator, bei dem die für die Erfindung nicht wesentlichen Teile lediglich gestrichelt eingezeichnet sind.

Er besteht aus einer Infrarot-Strahlungsquelle 1, welche durch eine rotierende Blende 2 zyklisch unterbrochene Strahlung durch das in der Küvette 3 befindliche Meßgas 4 schickt. In einem Detektor 5 wird aufgrund der Strahlungsabsorption eine bestimmte Komponente im Meßgas, beispielsweise Hexan, ermittelt. Die Küvette 3 ist mit Gasein- und -auslaß 6 und 7 versehen. Ihre Stirnseiten sind mit strahlungsdurchlässigen Fenstern 8 abgeschlossen.

Die Innenwand der Küvette 3 ist mit einer Metallschicht 9 aus Reinaluminium (z. B. Al 99 nach DIN 1712) ausgekleidet. Die Oberfläche der Metallschicht ist poliert oder zumindest so bearbeitet, daß ihre Rauhtiefe weniger als 2 μm beträgt.

Die Metallschicht 9 kann auch aus einem vorgeformten Aluminiumblech 9' bestehen, wie es in den Figuren 2 und 3 in zwei Ansichten dargestellt ist. Es wird zu einem Zylinder zusammengebogen, in die Küvette 3 eingesetzt, wobei es infolge seiner elastischen Eigenschaft eng an der Küvetteninnenwand anliegt. In dem Alu-Blech 9', dessen Dicke d zwischen 0,1 und 0,2 mm beträgt, sind Öffnungen 6' und 7' angebracht, welche in eingebautem Zustand mit dem Gaseinlaß 6 und dem Gasauslaß 7 der Küvette 3 fluchten.

## Patentansprüche

1. Nichtdispersiver Infrarot-(NDIR)-Gasanalysator mit einer Infrarot-Strahlungsquelle, mindestens einer das Meßgas enthaltenden, stirnseitig mit strahlungsdurchlässigen Fenstern abgeschlossenen Küvette und Mitteln zur selektiven Messung der Infrarot-Absorption einer bestimmten Komponente des Meßgases, **dadurch gekennzeichnet,** daß die innere Wandfläche der Küvette (3) mit einer Metallschicht (9) aus Reinaluminium mit einem Aluminiumgehalt > 90 %, vorzugsweise 99 %, ausgekleidet ist.

2. NDIR-Gasanalysator nach Anspruch 1, **dadurch gekennzeichnet,** daß die Oberfläche der Metallschicht (9) eine Rauhtiefe von < 2 μm aufweist.

3. NDIR-Gasanalysator nach Anspruch 1 oder 2, **dadurch gekennzeichnet,** daß die Metallschicht (9) aus einem zylindrisch gebogenen Alu-Blech (9') mit einer Dicke (d) besteht, wobei 0,1 < d < 0,2 mm ist.

## Claims

1. Non-dispersive infrared (NDIR)-gas analyser with an infrared radiation source, at least one cell containing the measuring gas and closed on the end faces by radiation-permeable windows, and means for the selective measurement of the infrared absorption of a specific component of the measuring gas, characterised in that the inner wall surface of the cell (3) is coated with a metal layer (9) of pure aluminium with an aluminium content of > 90%, preferably 99%.

2. NDIR-gas analyser according to claim 1, characterised in that the surface of the metal layer (9) has a roughness depth of < 2μm.

3. NDIR-gas analyser according to claim 1 or 2, characterised in that the metal layer (9) comprises a cylindrically curved Alu-sheet (9') with a thickness (d), where 0.1 < d < 0.2 mm.

## Revendications

1. Analyseur de gaz non dispersif à rayonnement infrarouge (NDIR), comprenant une source de rayonnement infrarouge, au moins une cuvette contenant le gaz à mesurer et fermée du côté frontal par des fenêtres perméables au rayonnement et des moyens de mesure sélective de l'absorption du rayonnement infrarouge par un constituant déterminé du gaz à mesurer, caractérisé en ce que la surface intérieure de la paroi de la cuvette (3) est revêtue d'une couche métallique (9) en aluminium pur, ayant une teneur en aluminium supérieure à 90 % et, de préférence, à 99 %.

2. Analyseur de gaz NDIR suivant la revendication 1, caractérisé en ce que la surface de la couche métallique (9) présente une profondeur de rugosité inférieure à 2 μm.

3. Analyseur de gaz NDIR suivant la revendication 1 ou 2, caractérisé en ce que la couche métallique (9) est constituée d'une tôle d'aluminium (9') incurvée cylindriquement et d'une épaisseur (d), avec 0,1 < d < 0,2 mm.

EP 0 385 173 B1

FIG 1

FIG 2

FIG 3

4